# EUROPEAN PATENT SPECIFICATION

(11) **EP 3 261 818 B1**
(45) Date of publication and mention of the grant of the patent: **04.08.2021**
(21) Application number: 16704910.5
(22) Date of filing: 11.02.2016
(51) Int. Cl.: B29C 51/34, B29C 51/30, B29L 31/00, B29L 31/22

(54) **THERMOFORMING MOULD AND METHOD OF FABRICATION OF A THERMOFORMING MOULD**
GIESSFORM FÜR WARMFORMEN UND VERFAHREN ZUR HERSTELLUNG EINER GIESSFORM FÜR WARMFORMEN
MOULE DE THERMOFORMAGE ET PROCÉDÉ DE FABRICATION D'UN MOULE DE THERMOFORMAGE

(30) Priority: 23.02.2015 GB 201502965
(43) Date of publication of application: 03.01.2018
(73) Proprietor: Par-Pak Europe Limited, Milton Keynes, Bedfordshire MK11 3HA (GB)
(72) Inventor: HARRISON, Keith, Milton Keynes Bedfordshire MK11 3HA (GB)
(74) Representative: Ligi, Stefano
(86) International application number: PCT/GB2016/050330
(87) International publication number: WO 2016/135443

(56) References cited:
- EP-A1- 0 846 546
- WO-A1-2013/076235
- DE-A1-102013 006 154
- US-A1- 2012 048 874
- US-A1- 2012 251 790

## Description

### Technical Field

The invention relates to a process of forming a composite thermoforming mould, and a thermoformed product obtained by the use of such a mould.

### Background

Thermoformed packaging made from thermoplastic polymers is widely used to package consumer goods, in particular consumer goods in retail outlets such as supermarkets.

In the thermoforming process, a planar sheet of thermoplastic is thermoformed by application of heat to adopt the shape of a mould.

Such moulds are typically made from a resin and are themselves manufactured by removing material from a block of resin according to a mould design.

Typically the mould begins as a mould blank e.g. made of resin material having a planar surface. Mould material is then removed from the mould blank to create a thermoforming surface comprising one or more cavities in the mould, until the thermoforming surface adopts the shape of the desired thermoformed product.

However, each point on the thermoforming surface must have an effective line-of-sight to the exterior of the mould, in order that the surface abrader can reach that portion of the surface. Additionally, any channels in the mould cannot be any narrower than the physical thickness of the abrader, in order for it to fit into the channel to create it.

These limitations place a restriction on the range of shapes that are possible to produce using a thermoforming mould.

Document WO2013/076235 is also know and discloses a mould comprising a cavity for moulding a closing-off device in a groove.

Thus, improvements in this area would be desirable.

### Summary of the Invention

In a first aspect, the invention relates to a process of forming a composite thermoforming mould, the process involving manufacturing first and second mould portions from respective first and second mould blanks having a planar upper face and a planar side face, the two faces forming an edge at their point of intersection; the process involving forming a first cavity in the first mould blank, the perimeter of which is present on both the upper face and side face of the first mould blank, thereby forming a first mould portion, forming a second cavity in the second mould blank, the perimeter of which is present on both the upper face and side face of the second mould blank, thereby forming a second mould portion, wherein the portion of the perimeter of the second cavity on the side face of the second mould portion has a mirror image profile of the portion of the perimeter of the first cavity on the side face of the first mould portion, and wherein the first mould portion and the second mould portion are brought into contact so that the respective side faces are in contact and so that the two upper faces form a combined planar upper face and so that the portions of the perimeter on the side faces of both the first and second mould portions are aligned, thereby forming a combined cavity having a portion of its perimeter present on the upper face of the first mould portion and a portion of its perimeter present on the upper face of the second mould portion, thereby forming the composite thermoforming mould.
Moreover, portions of the combined cavity do not have line-of-sight to the open area above the cavity perimeter.

In a second aspect, the invention relates to a thermoforming mould comprising first and second mould portions having a planar upper face and a planar side face, the two faces forming an edge at their point of intersection, the first mould portion having a first cavity, the perimeter of which is present on both the upper face and side face of the first mould portion, the second mould portion having a second cavity, the perimeter of which is present on both the upper face and side face of the second mould portion, and wherein the portion of the perimeter of the second cavity on the side face of the second mould portion has a mirror image profile of the portion of the perimeter of the first cavity on the side face of the first mould portion and wherein the first mould portion and the second mould portion are in contact so that the respective side faces are in contact and so that the two upper faces form a combined planar upper face and so that the portions of the perimeter on the side faces of both the first and second mould portions are aligned, thereby forming a combined cavity having a portion of its perimeter present on the upper face of the first mould portion and a portion of its perimeter present on the upper face of the second mould portion.
Moreover, portions of the combined cavity do not have line-of-sight to the open area above the cavity perimeter.

In a third aspect, the invention relates to a process of thermoforming a thermoplastic blank in a mould as defined above to adopt the contour of the combined thermoforming mould as described above.

Thus, the present invention involves the formation of a combined cavity by forming two halves of the cavity on separate mould portions. This effectively allows the combined cavity to be formed from the inside, rather than from the cavity opening. Once formed the cavity halves are placed together to form the cavity. Thus, the invention permits the formation of effectively any depth or narrowness of cavity. Additionally it allows for the formation of cavities that do not have line-of-sight to the open region above the cavity.

In a preferred embodiment, the depth of the combined cavity, that being the maximum distance perpendicular from a point in the plane of the upper surface, is greater than the width, that being the minimum distance parallel to the upper surface. In particular the ratio of the depth to the width is greater than 1.5:1, more preferably greater than 2: 1, even more preferably greater than 3:1.

In general the side faces are perpendicular to the upper faces. Also the mould blanks are typically substantially cuboid, although other shapes are possible.

The first and second mould portions may be adhered to each other with an adhesive.

The invention will now be illustrated, by way of example and with reference to the following figures, in which:
Figure 1 is a perspective view of first and second mould portions forming a composite thermoforming mould according to the invention.
Figure 2 is a thermoformed product formed from thermoforming a thermoplastic blank onto the mould shown in figure 1.

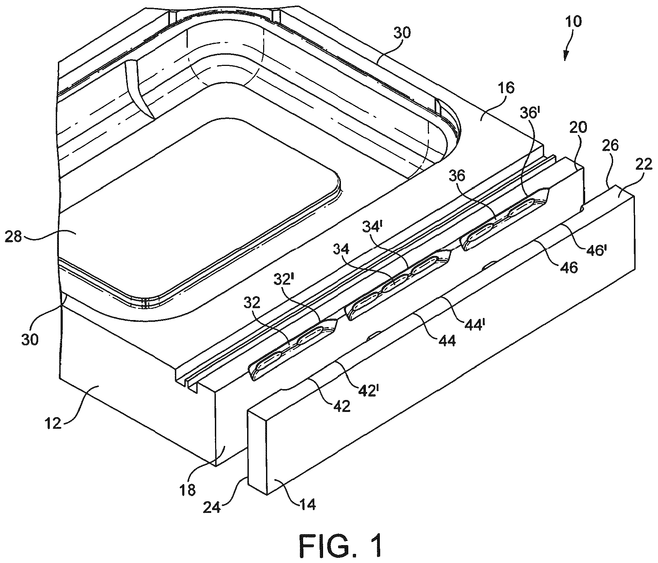

Turning to the figures, figure 1 shows a composite mould **10** made up of a first mould portion **12** and a second mould portion **14.**

The first mould portion **12** has a planar upper face **16** and a planar side face **18** which intersect along edge **20.** Similarly, second mould portion **14** has a planar upper face **22** and a planar side face **24** which intersect along edge **26.**

First mould portion **12** comprises a cavity **28,** whose perimeter **30** exists entirely on the upper face **16** of the first mould portion. First mould portion 12 also comprises three cavities **32, 34, 36** whose perimeters **32', 34', 36'** exist partially on upper face **16** and partially on side face **18.**

Second mould portion **14** comprises three cavities **42, 44, 46** that have their perimeters **42', 44', 46'** partially on upper face **22** and partially on side face **24.** Additionally, although not shown, the portion of perimeters **42', 44', 46'** that is present on the side face **24** are mirror images of the portion of perimeters **32', 34', 36'** that are present on side face **18.**

When the first mould portion **12** and second mould portion **14** are brought together, their faces **18, 24** are in intimate contact and their upper faces **16, 22** form a combined planar upper face.

The result is that cavities **32** and **42** combine together to form a new single cavity. Likewise cavities **34** and **44** and **36** and **46** also combine to form respective single cavities. These combined cavities have their perimeter partially in upper surface **16** and partially in upper surface **22.**

It is to be noted that it would not be possible to form the combined cavity from a single mould blank with devices that rely on line-of-sight to cause formation of the mould.

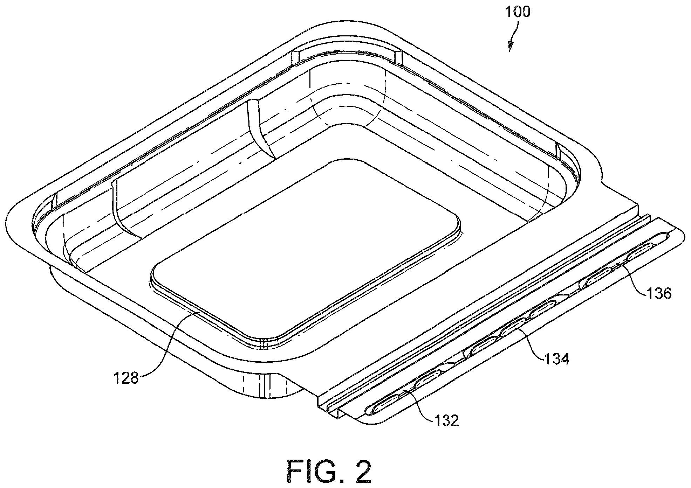

Figure 2 shows a thermoformed product **100** that has been formed from a thermoplastic blank and formed to adopt the contour of the thermoforming mould **10** shown in figure 1.

The thermoformed product has a main cavity **128** and also has three narrow cavities **132, 134, 136.**

## Claims

1. A process of forming a composite thermoforming mould, the process involving manufacturing first and second mould portions (12, 14) from respective first and second mould blanks having a planar upper face (16, 22) and a planar side face (18, 24), the two faces forming an edge (20, 26) at their point of intersection; the process involving
forming a first cavity (32) in the first mould blank, the perimeter of which is present on both the upper face (16) and side face (18) of the first mould blank, thereby forming a first mould portion(12),
forming a second cavity (42) in the second mould blank, the perimeter of which is present on both the upper face (22) and side face (24) of the second mould blank, thereby forming a second mould portion (14), and
wherein the portion of the perimeter of the second cavity (42) on the side face (24) of the second mould portion (14) has a mirror image profile of the portion of the perimeter of the first cavity (32) on the side face (18) of the first mould portion (12), and
wherein the first mould portion (12) and the second mould portion (14) are brought into contact so that the respective side faces (18, 24) are in contact and so that the two upper faces (16, 22) form a combined planar upper face and so that the portions of the perimeter on the side faces (18, 24) of both the first and second mould portions (12, 14) are aligned, thereby forming a combined cavity having a portion of its perimeter present on the upper face (16) of the first mould portion (12) and a portion of its perimeter present on the upper face (22) of the second mould portion (14), thereby forming the composite thermoforming mould (10), **characterized in that** portions of the combined cavity do not have line-of-sight to an open area above the cavity perimeter.

2. A thermoforming mould comprising first and second mould portions (12, 14) having a planar upper face (16, 22) and a planar side face (18, 24), the two faces forming an edge (20, 26) at their point of intersection, the first mould portion (12) having a first cavity (32), the perimeter of which is present on both the upper face (16) and side face (18) of the first mould portion (12), the second mould portion (14) having a second cavity (42), the perimeter of which is present on both the upper face (22) and side face (24) of the second mould portion (14), and
wherein the portion of the perimeter of the second cavity (42) on the side face (24) of the second mould portion (14) has a mirror image profile of the portion of the perimeter of the first cavity (32) on the side face (18) of the first mould portion (12) and
wherein the first mould portion (12) and the second mould portion (14) are in contact so that the respective side faces (18, 24) are in contact and so that the two upper faces (16, 22) form a combined planar upper face and so that the portions of the perimeter on the side faces (18, 24) of both the first and second mould portions (12, 14) are aligned, thereby forming a combined cavity having a portion of its perimeter present on the upper face (16) of the first mould portion (12) and a portion of its perimeter present on the upper face (22) of the second mould portion (14) **characterized in that** portions of the combined cavity do not have line-of-sight to an open area above the cavity perimeter.

3. A process of thermoforming a thermoplastic blank in a mould of claim 2 to adopt the contour of the combined thermoforming mould (10) claimed in claim 2.

4. A process or mould according to any one of the preceding claims, wherein the ratio of the depth of the combined cavity to the width is greater than 1.5:1, more preferably greater than 2: 1, even more preferably greater than 3: 1.

5. A process or mould according to any one of the preceding claims, wherein the first and second mould portions (12, 14) are adhered to each other with an adhesive.

## Patentansprüche

1. Verfahren zum Herstellen einer Verbund-Thermoformungsform, wobei das Verfahren das Fertigen von ersten und zweiten Formabschnitten (12, 14) aus jeweiligen ersten und zweiten Formrohlingen umfasst, die eine ebene obere Fläche (16, 22) und eine ebene seitliche Fläche (18, 24) aufweisen, wobei die zwei Flächen eine Kante (20, 26) an ihrem Schnittpunkt bilden; wobei das Verfahren umfasst
das Bilden eines ersten Hohlraums (32) im ersten Formrohling, dessen Umfang sowohl an der oberen Fläche (16) und an der seitlichen Fläche (18) des ersten Formrohlings vorhanden ist, wodurch ein erster Formabschnitt (12) gebildet wird,
das Bilden eines zweiten Hohlraums (42) im zweiten Formrohling, dessen Umfang sowohl an der oberen Fläche (22) und an der seitlichen Fläche (24) des zweiten Formrohlings vorhanden ist, wodurch ein zweiter Formabschnitt (14) gebildet wird, und
worin der Abschnitt des Umfangs des zweiten Hohlraums (42) an der seitlichen Fläche (24) des zweiten Formabschnitts (14) ein spiegelbildliches Profil des Abschnitts des Umfangs des ersten Hohlraums (32) an der seitlichen Fläche (18) des ersten Formabschnitts (12) hat, und
worin der erste Formabschnitt (12) und der zweite Formabschnitt (14) in Kontakt gebracht werden, so dass die jeweiligen seitlichen Flächen (18, 24) im Kontakt sind und so dass die zwei oberen Flächen (16, 22) eine kombinierte ebene obere Fläche bilden und so dass die Abschnitte des Umfangs an den seitlichen Flächen (18, 24) sowohl der ersten als auch der zweiten Formabschnitte (12, 14) ausgerichtet sind, wodurch ein kombinierter Hohlraum gebildet wird, der einen Abschnitt von seinem Umfang hat, der an der oberen Fläche (16) des ersten Formabschnitts (12) vorhanden ist, und einen Abschnitt von seinem Umfang hat, der an der oberen Fläche (22) des zweiten Formabschnitts (14) vorhanden ist, wodurch die Verbund-Thermoformungsform (10) gebildet wird, **dadurch gekennzeichnet, dass** Abschnitte des kombinierten Hohlraums keine Sichtverbindung zu einem offenen Bereich über dem Hohlraumumfang haben.

2. Thermoformungsform, umfassend erste und zweite Formabschnitte (12, 14), die eine ebene obere Fläche (16, 22) und eine ebene seitliche Fläche (18, 24) aufweisen, wobei die zwei Flächen eine Kante (20, 26) an ihrem Schnittpunkt bilden, der erste Formabschnitt (12) einen ersten Hohlraum (32) hat, dessen Umfang sowohl an der oberen Fläche (16) und an der seitlichen Fläche (18) des ersten Formabschnitts (12) vorhanden ist, der zweite Formabschnitt (14) einen zweiten Hohlraum (42) hat, dessen Umfang sowohl an der oberen Fläche (22) und an der seitlichen Fläche (24) des zweiten Formabschnitts (14) vorhanden ist, und
worin der Abschnitt des Umfangs des zweiten Hohlraums (42) an der seitlichen Fläche (24) des zweiten Formabschnitts (14) ein spiegelbildliches Profil des Abschnitts des Umfangs des ersten Hohlraums (32) an der seitlichen Fläche (18) des ersten Formabschnitts (12) hat, und
worin der erste Formabschnitt (12) und der zweite Formabschnitt (14) im Kontakt sind, so dass die jeweiligen seitlichen Flächen (18, 24) im Kontakt sind und so dass die zwei oberen Flächen (16, 22) eine kombinierte ebene obere Fläche bilden und so dass die Abschnitte des Umfangs an den seitlichen Flächen (18, 24) sowohl der ersten als auch der zweiten Formabschnitte (12, 14) ausgerichtet sind, wodurch ein kombinierter Hohlraum gebildet wird, der einen Abschnitt von seinem Umfang hat, der an der oberen Fläche (16) des ersten Formabschnitts (12) vorhanden ist, und einen Abschnitt von seinem Umfang hat, der an der oberen Fläche (22) des zweiten Formabschnitts (14) vorhanden ist, **dadurch gekennzeichnet, dass** Abschnitte des kombinierten Hohlraums keine Sichtverbindung zu einem offenen Bereich über dem Hohlraumumfang haben.

3. Verfahren zur Thermoformung eines thermoplastischen Rohlings in einer Form nach Anspruch 2, um den Umriss der kombinierten Thermoformungsform (10) nach Anspruch 2 einzunehmen.

4. Verfahren oder Form nach einem der vorhergehenden Ansprüche, worin das Verhältnis der Tiefe des kombinierten Hohlraums zur Breite größer als 1,5:1, bevorzugt größer als 2:1, und noch bevorzugter größer als 3:1 ist.

5. Verfahren oder Form nach einem der vorhergehenden Ansprüche, worin die ersten und zweiten Formabschnitte (12, 14) miteinander mit einem Klebstoff geklebt werden.

## Revendications

1. Un procédé de formation d'un moule composite de thermoformage, le procédé impliquant la fabrication de première et deuxième parties de moule (12, 14) à partir de première et deuxième ébauches de moule respectives ayant une face supérieure plane (16, 22) et une face latérale plane (18, 24), les deux faces formant une arête (20, 26) à leur point d'intersection ; le processus impliquant
le fait de former une première cavité (32) dans la première ébauche de moule, dont le périmètre est présent à la fois sur la face supérieure (16) et la face latérale (18) de la première ébauche de moule, formant ainsi une première partie de moule (12),
le fait de former une deuxième cavité (42) dans la deuxième ébauche de moule, dont le périmètre est présent à la fois sur la face supérieure (22) et la face latérale (24) de la deuxième ébauche de moule, formant ainsi une deuxième partie de moule (14), et
la portion du périmètre de la deuxième cavité (42) sur la face latérale (24) de la deuxième partie de moule (14) ayant un profil en miroir de la portion du périmètre de la première cavité (32) sur la face latérale (18) de la première partie de moule (12), et
la première partie de moule (12) et la deuxième partie de moule (14) étant amenées en contact de sorte que les faces latérales respectives (18, 24) soient en contact et de sorte que les deux faces supérieures (16, 22) forment une face supérieure plane combinée et de sorte que les portions du périmètre sur les faces latérales (18, 24) des première et deuxième portions de moule (12, 14) soient alignées, formant ainsi une cavité combinée ayant une portion de son périmètre présente sur la face supérieure (16) de la première partie de moule (12) et une portion de son périmètre présente sur la face supérieure (22) de la deuxième partie de moule (14), formant ainsi le moule composite de thermoformage (10), **caractérisé en ce que** des portions de la cavité combinée n'ont pas de ligne visuelle sur une zone ouverte située au-dessus du périmètre de la cavité.

2. Un moule de thermoformage comprenant des première et deuxième portions de moule (12, 14) ayant une face supérieure plane (16, 22) et une face latérale plane (18, 24), les deux faces formant une arête (20, 26) à leur point d'intersection, la première partie de moule (12) présentant une première cavité (32) dont le périmètre est présent à la fois sur la face supérieure (16) et la face latérale (18) de la première partie de moule (12), la deuxième une partie de moule (14) ayant une deuxième cavité (42), dont le périmètre est présent à la fois sur la face supérieure (22) et la face latérale (24) de la deuxième partie de moule (14), et
la portion du périmètre de la deuxième cavité (42) sur la face latérale (24) de la deuxième partie de moule (14) ayant un profil en miroir de la portion du périmètre de la première cavité (32) sur la face latérale (18) de la première partie de moule (12), et
la première partie de moule (12) et la deuxième partie de moule (14) sont en contact de sorte que les faces latérales respectives (18, 24) soient en contact et de sorte que les deux faces supérieures (16, 22) forment une face supérieure plane combinée et de sorte que les portions du périmètre sur les faces latérales (18, 24) des première et deuxième parties de moule (12, 14) soient alignées, formant ainsi une cavité combinée ayant une partie de son périmètre présente sur la face supérieure (16) de la première partie de moule (12) et une portion de son périmètre présente sur la face supérieure (22) de la deuxième partie de moule (14), **caractérisé en ce que** les portions de la cavité combinée n'ont pas de ligne visuelle sur une zone ouverte située au-dessus du périmètre de la cavité.

3. Un procédé de thermoformage d'une ébauche thermoplastique dans un moule selon la revendication 2 pour adopter le contour du moule combiné de thermoformage (10) selon la revendication 2.

4. Un procédé ou un moule selon l'une quelconque des revendications précédentes, dans lequel le rapport de la profondeur de la cavité combinée à la largeur est supérieur à 1,5:1, de façon préférée supérieur à 2:1, de façon encore préférée supérieur à 3:1.

5. Un procédé ou moule selon l'une quelconque des revendications précédentes, dans lequel les première et deuxième parties de moule (12, 14) sont liées l'une à l'autre au moyen d'un adhésif.
